Europäisches Patentamt

European Patent Office

Office européen des brevets

(11) Publication number: **0 190 551**
**B1**

# EUROPEAN PATENT SPECIFICATION

(45) Date of publication of patent specification: **11.04.90**

(21) Application number: **86100044.6**

(22) Date of filing: **03.01.86**

(51) Int. Cl.⁵: **H 02 B 13/00, H 02 B 5/06**

(54) **Gas insulated switchgear.**

(30) Priority: **09.01.85 JP 823/85**

(43) Date of publication of application:
**13.08.86 Bulletin 86/33**

(45) Publication of the grant of the patent:
**11.04.90 Bulletin 90/15**

(84) Designated Contracting States:
**CH DE FR LI**

(56) References cited:
**DE-A-2 646 617**

(73) Proprietor: **HITACHI, LTD.**
**6, Kanda Surugadai 4-chome Chiyoda-ku Tokyo (JP)**

(72) Inventor: **Suzuyama, Hiroshi**
**15-5-3, Suwacho-4-chome**
**Hitachi-shi (JP)**
Inventor: **Sakaguchi, Minoru**
**23-5, Higashionumacho-1-chome**
**Hitachi-shi (JP)**
Inventor: **Tsubaki, Toru**
**14-2, Suwacho-4-chome**
**Hitachi-shi (JP)**

(74) Representative: **Patentanwälte Beetz sen. - Beetz jun. Timpe - Siegfried - Schmitt-Fumian**
**Steinsdorfstrasse 10**
**D-8000 München 22 (DE)**

Courier Press, Leamington Spa, England.

# Description

The present invention generally relates to a gas insulated switch equipment, and more particularly to a gas insulated switchgear of the one and half-breaker system.

As one of the arrangements of the substation for an extra-high voltage power system, there is known a so-called one-and-half breaker system in which a gas insulated switchgear basically composed of three gas insulated circuit breakers electrically connected in series to one another is employed.

In the gas insulated switchgear, three circuit breakers each being equipped with disconnectors (i.e. disconnecting switches) at both ends, respectively, are arrayed linearly, wherein both ends of the linear array of the circuit breakers are connected to gas insulated main buses. Bushings are connected between every adjacent two of the circuit breakers and serve to connect the gas insulated switchgear to a power transmission line system.

Two sets of steel tower pairs are provided for suspending or supporting the transmission line, wherein the into-tower distance between paired steel towers in each set is determined so that the air insulation distance can be assured in the state in which three phase transmission lines are horizontally suspended. Since the two sets of towers are facing to each other with a predetermined distance therebetween corresponding to the axial length of the gas insulated switchgear, the structure in which the serial connections of three circuit breakers are disposed in the linear array as described above is of relatively large size. Further, in order to assure the air insulation distance between the bushings among the juxtaposed three phase paths, the axial length of the main buses as well as the inter-tower distance are generally large.

In other words, the hitherto known gas insulated switchgear of the one-and-a-half breaker system has required a large site area for installation as well as a large scale suspension tower structure.

To deal with the above problems, it has been proposed that three groups, each including three circuit breakers of single-phase type for respective phases, are disposed in juxtaposition or three circuit breakers of three-phase common enclosure type are installed in parallel to the main buses. For example, reference may be made to Japanese Patent Application Laid-Open No. 59002/1984.

More specifically, the first mentioned proposal resides in that three groups each including three circuit breakers are disposed in juxtaposition to one another between two main buses, wherein the circuit breakers of two selected groups are connected in series by a connecting bus of three-phase common enclosure type to which respective ends of branching buses of respective phases are connected, while the other ends of the branching buses are connected to the bushings.

The curcuit breakers of different two groups are connected in a similar manner by means of other connecting buses and the branching buses. With this arrangement, main buses are disposed above the axes of the grouped circuit breakers while the connecting buses are disposed below the axes. Consequently, the individual branching buses are led out from the connecting buses at positions located between the circuit breakers, respectively. As a result, dimension of each branching bus is increased for assuring the insulation distance for the bushing of each phase, involving complicated structure. Besides, distance between the adjacent groups of the circuit breakers is necessarily increased, which means that the site area for installation is increased, giving rise to a problem.

In the case of the second mentioned proposal according to which three circuit breakers are disposed in parallel with each main bus in the one-and-a-half breaker system, the circuit breakers of vertical types are employed and arrayed linearly in the isolated phase arrangement. This construction also suffers from shortcomings in that the structure of the branching buses each of relatively great length is complicated, requiring thus a large site area for installation to disadvantage.

Under the circumstances, there exists a demand for solving the problems mentioned above in conjunction with the gas insulated switchgear of the one-and-a-half breaker system.

DE—A—26 46 617 discloses a gas insulated switch gear, wherein the circuit breakers are disposed parallel to each other and orthogonally to the axes of the main buses and the leading-out bushings are provided at both sides of the circuit braker group, wherein both the main buses and the connecting buses are positioned above the circuit breakers, and wherein each group of the circuit breakers disposed closer to each other are of the same phase and the circuit breakers of different phases are disposed in different groups.

An object of the present invention is to provide gas insulated switchgear of the one-and-a-half breaker system which allows the site area required for installation to be reduced significantly.

Another object of the present invention is to provide a gas insulated switchgear of the one-and-a-half breaker system which can be implemented in a much facilitated manner.

To achieve these objects, it is proposed, according to the present invention, a gas insulated switchgear, comprising a pair of main buses extending substantially in parallel with a distance therebetween, three groups of circuit breakers installed in horizontal or vertical position between said main buses and connected in series phase-separately by connecting buses, said serial connection having ends electrically connected to said main buses, and insulated leading-out means led out from the connecting buses between said circuit breakers by way of branching buses, wherein said three circuit breakers are juxtaposed so that respective axes extend orthogonally to the

2

parallel axes of said main buses, characterised in that said connecting buses are disposed above main buses and serve to connect serially the adjacent ones of said circuit breakers, and said branching buses are connected to said connecting bus, respectively.

The present invention will be apparent from the following detailed description taken in conjunction with the accommpanying drawings, in which:

Fig. 1 is a plan view showing a gas insulated switchgear according to a first embodiment of the present invention;

Fig. 2 is an elevational view of the gas insulated switchgear as viewed from the right hand side in Fig. 1;

Fig. 3 is a front view of Fig. 1 in which branching buses and bushings are omitted from illustration;

Fig. 4 is a plan view showing a gas insulated switchgear according to a further embodiemnt of the invention; and

Fig. 5 is a side elevational view of the switchgear structure of Fig. 4 as viewed from the rightside thereof.

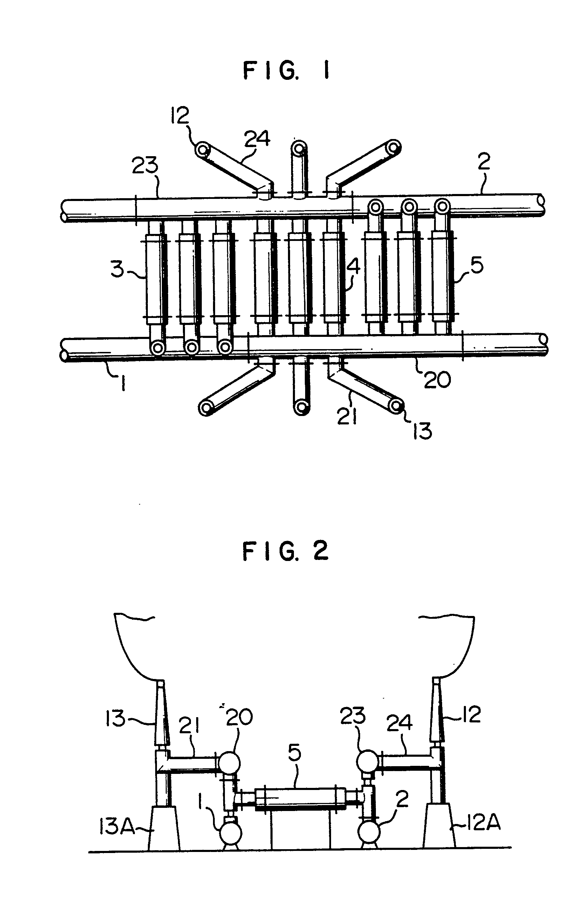

Now, an exemplary embodiment of the gas-insulated switchgear will be described by referring to, Figs. 1 to 3.

In the case of the this embodiment, there are used gas insulated circuit breakers of isolated phase horizontal construction type.

A pair of main buses 1 and 2 are installed in parallel with each other with a predetermined distance therebetween. Disposed sequentially in juxtaposition between these main buses 1 and 2 are three groups of circuit breakers denoted collectively by reference nunerals 3, 4 and 5, each group including three circuit breakers for three phases, respectively, and disposed in order of phase. A connecting bus 20 is installed between the two groups of the circuit breakers 4 and 5 above the corresponding main bus 1, while a connecting bus 23 is installed between the two groups of the circuit breakers 3 and 4 above the corresponding main bus 2. As will be described hereinafter, branching buses 21 and 24 provided for three phases, respectively, are connected to the connecting buses 20 and 23, respectively, at positions opposite to each other.

Respective ends of the juxtaposed circuit breakers of the group 4 are connected to the corresponding ends of the circuit breakers of the group 5 through the respective disconnectors and other elements as required and the connecting bus 20 overlying the main bus 1 on the phase-by-phase basis, while the other ends of the circuit breakers of the group 5 are connected to the main bus 2 through respective disconnectors and other elements as required. The other ends of the circuit breakers of the group 4 are connected to the corresponding ends of the circuit breakers of the group 3 through the respective disconnectors and other elements and through the connecting bus 23 located above the main bus 2, while the other ends of the circuit breakers of the groups 3 are connected to the main bus 1 through the respective disconnectors and other elements. In this manner, a one-and-a-half breaker system is realized which includes for each phase the path extending from the main bus 1 through the circuit breakers of the group 3, the connecting bus 23 for connecting the branching bus 24, the circuit breakers of the group 4, the connecting bus 20 for connecting the branching bus 21 and the circuit breakers of the group 5 leading to the main bus 2.

In the case of the illustrative embodiment, the branching buses 21 for individual phases gave respective ends connected to the connecting buses 20 at positions thereof which are corresponding to the intersection between the extended axes of the circuit breakers and the connecting buses, respectively, in a plan view thereof as shown in Fig. 1, while the other end portions of the branching buses 21 are led out horizontally, being fanned out to assure interphase insulation distance, to be connected to respective bushings 13 each supported on a framework 13A and constituting an insulated leading-out means. Similarly, the branching buses 24 of the respective phases have one ends connected to the connecting bus 23 at the axial positions thereof which are intersected by the extended axes of the circuit breakers of the group 4 of the corresponding phases, respectively, while the other ends of the branching buses 24 are connected to respective bushings 13 supported on a framwork 12A and constituting an insulated leading-out means.

In the illustrated embodiment, each of the main buses 1 and 2 and the connecting buses 20 and 23 is constituted by a three-phase common enclosure type bus filled with an insulation gas. The axes of these buses 1, 2, 20 and 23 extend substantially perpendicularly to the axes of the circuit breakers of the groups 3, 4 and 5, wherein the main buses 1 and 2 are disposed below the circuit breaker groups, while the connecting buses 20 and 23 are installed above the circuit breakers. Further, it will be noted that the main bus 1 and the connecting bus 20 are disposed in parallel with the main bus 2 and the connecting bus 22 with the circuit breaker groups 3, 4 and 5 being interposed therebetween.

With the illustrative arrangement in which the branching buses 21 and 24 are disposed on the extended axes of the circuit breakers belonging to the group 4, the distance between any adjacent groups of the juxtaposed circuit breakers can be decreased, as the result of which the site area for installation can be reduced about a half when compared with the case of the hitherto known switchgear.

Further, because the connecting bus 20, the branching buses 21 and the bushings 13 on one hand and the connecting bus 23, the branching buses 24 and the bushings 12 on the other hand are disposed symmetrically relative to the circuit breaker group 4, the connecting buses, branching buses and bushings can be made same, to facilitate the implementation.

The embodiment described above may also be applied to the system wherein the main buses 1 and 2 and the connecting buses 20 and 23 are each made of three single-phase buses 20 insulated from each other. In a version of this embodiment, the positions of the main bus 1 and 2 and the connecting buses 20 and 23 can be reversed.

Although not illustrated, the suspension steel tower system may be of an integral structure in which a pair of steel legs are disposed in opposition to each other between the main buses 1 and 2 with a predetermined distance therebetween. The steel legs in turn are connected to each other by means of a beam member which in turn have suspension insulators for suspending aerial lines of individual phases mounted at both ends, respectively, wherein the aerial lines of the individual phases are connected to the corresponding bushings 12 and 13, respectively, which serve as the insulated leading-out means.

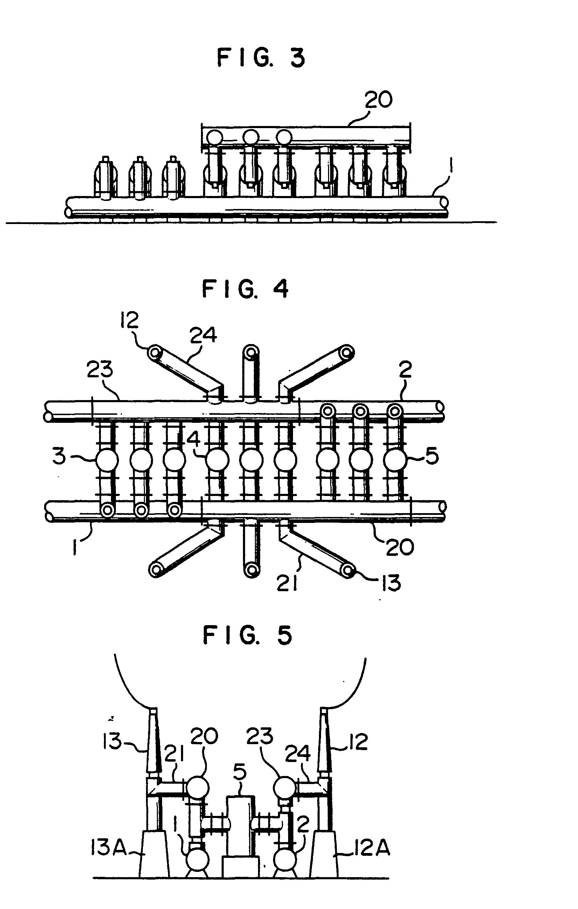

Figs. 4 and 5 shows another embodiment of the present invention. In the case of this embodiment, each of the buses 1, 2 20 and 23 is of a three-phase common enclosure type the same as that of Figs. 1, 2 and 3, while the circuit breaker as employed is of a known vertical type. In Figs. 3 and 4, like reference symbols are used to denote like components shown in Figs. 1 and 2. As will be seen in Fig. 5, the circuit breakers of the group 5 are enclosed within an upstanding tank having a vertical axis, wherein both terminals are led out in opposite horizontal directions, respectively.

With this structrue, same effects as those of the first embodiment can be attained. Additionally, the distances between the main buses 1 and 2 and between the connecting buses 20 and 23 can be reduced when compared with the first embodiment, whereby a gas insulated switchgear of a more compact structure can be realized.

The gas insulated switchgears according to the invention are very suited for indoor service or application because of significantly reduced site area required for installation.

As will now be appreciated, the gas insulated switchgear of the structure taught by the present invention allows the site area for the installation to be considerably reduced by virtue of the appropriate relative disposition of the main buses, the connecting buses three circuit breakers for each phase. Further, due to symmetrical disposition of the main buses, the connecting buses and also the branching buses on both sides of the circuit breakers, construction or realization of the switchgear can be extremely facilitated, to another advantage.

## Claims

1. A gas insulated switchgear, comprising a pair of main buses (1, 2) extending substantially in parallel with a distance therebetween, three groups of circuit breakers (3, 4, 5) installed in horizontal or vertical position between said main buses and connected in series phase-separately by connecting buses (20, 23), said serial connection having ends electrically connected to said main buses (1, 2), and insulated leading-out means (13, 12) led out from the connecting buses (20, 23) between said circuit breakers by way of branching buses (21, 24), wherein said three circuit breakers (3, 4, 5) are juxtaposed so that respective axes extend orthoganally to the parallel axes of said main buses (1, 2) characterized in that said connecting buses (20, 23) are disposed above said main buses (1, 2) and serve to connect serially the adjacent ones of said circuit breakers, and said branching buses (21, 24) are connected to said connecting buses (20, 23), respectively.

2. A gas insulated switchgear according to claim 1, wherein each of said main buses (1, 2) and connecting buses (20, 23) is of a three-phase common enclosure type.

3. A gas insulated switchgear according to claim 1, wherein each of said main buses (1, 2) is disposed below the axes connecting the respective ends of the circuit breakers (3, 4, 5) connected to the connecting buses (20, 23) or the main buses (1, 2), while each of said connecting buses (20, 23) is disposed above said axes.

4. A gas insulated switchgear according to claim 1, wherein each of said insulated leading-out means (12, 13) is mounted on an end of each branching bus (24, 21) led out horizontally from the center axis of each of said connecting buses (20, 23).

5. A gas insulated switchgear according to claim 2, wherein said branching buses (21, 24) are horizontally led out by disposing symmetrically said connecting buses (20, 23).

6. A gas insulated switchgear according to claim 1, wherein said groups of the circuit breakers (3, 4, 5) are juxtaposed with a substantially same distance therebetween, said insulated leading-out means (12, 13) being disposed at a position of the connecting bus (20, 23) which is intersected by an extension of the center axis of the center circuit breakers.

## Patentansprüche

1. Gasisolierte Schaltanlage, umfassend zwei Hauptsammelschienen (1, 2), die im wesentlichen parallel mit Abstand verlaufen, drei Gruppen von Leistungsschaltern (3, 4, 5), die in Horizontal- oder Vertikallage zwischen den Hauptsammelschienen eingebaut und durch Anschlußschienen (20, 23) in Reihe phasengetrennt verbunden sind, wobei die Enden der Reihenverbindungen elektrisch mit den Hauptsammelschienen (1, 2) verbunden sind, und isolierte Durchführungsmittel (13, 12), die von den Anschlußschienen (20, 23) zwischen den Leistungsschaltern über Abzweigleitungen (21, 24) herausgeführt sind, wobei die drei Leistungsschalter (3, 4, 5) nebeneinander angeordnet sind, so daß ihre jeweiligen Achsen orthogonal zu den parallelen Achsen der Hauptsammelschienen (1, 2) verlaufen, dadurch gekennzeichnet, daß die Anschlußschienen (20, 23) über den Hauptsammelschienen (1, 2) angeordnet sind und dazu dienen, die jeweils aneinandergrenzenden Leistungsschalter miteinander in Reihe zu verbinden, bzw. daß die Abzweigleitungen (21, 24) mit den Anschlußschienen (20, 23) verbunden sind.

2. Gasisolierte Schaltanlage nach Anspruch 1, wobei jede Hauptsammelschiene (1, 2) und jede Anschlußleitung (20, 23) vom Drehstromtyp mit gemeinsamer Kapselung ist.

3. Gasisolierte Schaltanlage nach Anspruch 1, wobei jede Hauptsammelschiene (1, 2) unter den Achsen angeordnet ist, die die jeweiligen Enden der Leistungsschalter (3, 4, 5) verbinden, die an die Anschlußleituneng (20, 23) oder die Hauptsammelschienen (1, 2) angeschlossen sind, während jede Anschlußleitung (20, 23) über diesen Achsen angeordnet ist.

4. Gasisolierte Schaltanlage nach Anspruch 1, wobei jede der isolierten Durchführungen (12, 13) an einem Ende jeder Abzweigleitung (24, 21) befestigt ist, das horizontal von der Mittenachse jeder Anschlußleitung (20, 23) herausgeführt ist.

5. Gasisolierte Schaltanlage nach Anspruch 2, wobei die Abzweigleitungen (21, 24) dadurch horizontal herausgeführt sind, daß die Anschlußleitungnen (20, 23) symmetrisch angeordnet sind.

6. Gasisolierte Schaltanlage nach Anspruch 1, wobei die Gruppen von Leistungsschaltern (3, 4, 5) nebeneinander mit im wesentlichen dem gleichen Abstand zwischen sich angeordnet sind, wobei die isolierten Durchführungen (12, 13) an einer Stelle der Anschlußleitung (20, 23) angeordnet sind, die von einer Verllänger der Mitte- nachse der mittleren Leistungsschalter geschnit- ten wird.

**Revendications**

1. Installation de commutation isolée par un gaz, comprenant un couple de barres omnibus principales (1, 2) sensiblement parallèles et distantes l'une de l'autre, trois groupes de sectionneurs (3, 4, 5) installés dans une position horizontale ou verticale entre lesdites barres omnibus principales et raccordés en série, séparément pour les différentes phases, par des barres omnibus de raccordement (20, 23), ledit raccordement en série comportant des extrémités raccordées électriquement auxdites barres omnibus principales (1, 2), et des moyens de sortie isolés (13, 12) reliés aux barres omnibus de raccordement (20, 23) entre les sectionneurs, par l'intermédiaire de barres omnibus de dérivation (21, 24), lesdits trois sectionnoeurs (3, 4, 5) étant juxtaposés de sorte que leurs axes respectifs sont perpendiculaires aux axes parallèles desdites barres omnibus principales (1, 2), caractérisée en ce que lesdites barres de raccordement (20, 23) sont disposées au-dessus desdites barres omnibus principales (1, 2) et servent à raccorder en série des sectionneurs voisins parmi lesdits sectionneurs, et que lesdites barres omnibus de dérivation (21, 22) sont raccordées respectivement auxdites barres omnibus de raccordement (20, 23).

2. Installation de commutation isolée par un gaz selon la revendication 1, dans lequelle chacune desdites barres omnibus principales (1, 2) et desdites barres omnibus de raccordement (20, 23) est du type à enceinte commune pour les trois phases.

3. Installation de commutation isolée par un gaz selon la revendication 1, dans lequelle chacune desdites barres omnibus principales (1, 2) est disposée au-dessous des axes reliant les extrémités respectives des sectionneurs (3, 4, 5) raccordés aux barres omnibus de raccordement (20, 21) ou aux barres omnibus principales (1, 2), tandis que chacune desdites barres omnibus de raccordement (20, 23) est disposée au-dessus desdits axes.

4. Installation de commutation isolée par un gaz selon la revendication 1, dans lequelle chacune desdits moyens isolés de sortie (12, 13) est monté sur une extrémité de chaque barre omnibus de dérivation (24, 21) disposée horizontalement à partir de l'axe central de chacune desdites barres omnibus de raccordement (20, 23).

5. Installation de commutation isolée par un gaz selon la revendication 2, dans lequelle lesdites barres omnibus de dérivation (21, 24) sont dispo- sées horizontalement, moyennant une disposi- tion symétrique desdites barres omnibus de raccordement (20, 23).

6. Installation de commutation isolée par un gaz selon la revendication 1, dans laquelle lesdits groupes de sectionneurs (3, 4, 5) sont juxtaposés en étant séparés sensiblement par la même distance, lesdits moyens isolés de sortie (12, 13) étant situés en un emplacement où le prolongement de l'axe central des sectionneurs centraux recoupe les barres omnibus de raccordement (20, 23).

# F I G. 1

# F I G. 2

FIG. 3

FIG. 4

FIG. 5